# EUROPEAN PATENT APPLICATION

(11) **EP 4 686 606 A1**
(43) Date of publication of application: **04.02.2026**
(21) Application number: 24191921.6
(22) Date of filing: 30.07.2024
(51) Int. Cl.: B60Q 1/26, B60Q 3/54, B60Q 3/64, F21K 9/64, F21S 10/00, F21S 10/02, F21S 43/16, F21S 43/239, F21V 9/38, F21S 43/20, F21S 43/50, F21V 8/00

(54) **LIGHTING DEVICE, LIGHTING DEVICE FOR A VEHICLE**

(71) Applicant: Valeo Vision, 93012 Bobigny Cedex (FR)
(72) Inventor: SANTAELLA, Juan-Jose, 93013 BOBIGNY CEDEX (FR); PUGA, Lucia, 93012 BOBIGNY CEDEX (FR); MONNOT, Jerome, 93012 BOBIGNY CEDEX (FR)
(74) Representative: Valeo Visibility

(57) **Abstract**

The invention relates to a lighting device (1), said lighting device (1) comprising :
- at least one light source (10) that is configured to emit light rays (r1) according to a first range of wavelengths (w), wherein said at least one light source (10) is monochromatic and wherein said lighting device (1) further comprises:
- at least one optical lightguide (11) with optical structures (110) that are configured to receive said light rays (r1) and to guide them according to respectively an orientation (o),
- a stack (12) of at least one wavelength conversion layer (120) that is configured to receive said light rays (r1) according to said orientation (o) and to transform them into at least one light beam (b) according to at least one second range of wavelengths (w') so as to produce a global light beam (F).

## Description

The present invention relates to a lighting device. Such a lighting device may be used, but not exclusively, in the automotive domain.

In the automotive domain, a lighting device comprises at least one light source that is configured to emit light rays according to a first range of wavelengths. The lighting device provides some light for the interior lighting or for lighting modules such as a headlamp or a rear lamp, or any other lighting modules for the vehicle. The light source is usually a RGB Light Emitting Diode ("LED") or a laser light source. The RGB Light Emitting Diode is a multi-source with three R G and B emitters. The lighting device further comprises an optical part and a diffusive foil to diffuse the light coming from the optical part in order to have a homogenous light. The diffusive foil is formed through a thermoform process that uses an overmoulded process.

One problem of this prior art is that the gamut achieved from the RGB Light Emitting Diode is restricted to the native RGB semiconductors incorporated in the packaging.

It is an object of the invention to provide a lighting device, which resolves the problem above-stated.

To this end, it is provided a lighting device, said lighting device comprising :
- at least one light source that is configured to emit light rays according to a first range of wavelengths, wherein said at least one light source is monochromatic and wherein said lighting device further comprises:
- at least one optical lightguide with optical structures that are configured to receive said light rays and to guide them according to respectively an orientation,
- a stack of at least one wavelength conversion layer that is configured to receive said light rays according to said orientation and to transform them into at least one light beam according to at least one second range of wavelengths so as to produce a global light beam.

As we will see in further details, thanks to the combination of the stack and of the optical lightguide(s), one can obtain a wider gamut of RGB colors than with the prior art as with the wavelength conversion layer(s) one can perform color tuning so as to obtain a wider gamut of RGB colors, whereas with a diffusive foil, one can't change its color.

According to non-limitative embodiments of the invention, the lighting device in accordance with the invention further comprises the following characteristics.

In a non-limitative embodiment, said orientation is of 90° from the light rays emitted by said at least one light source.

In a non-limitative embodiment, said first range of wavelengths corresponds to one of the range of the blue light, of the red light, or of the green light.

In a non-limitative embodiment, said first range of wavelengths corresponds to the range of the blue light.

In a non-limitative embodiment, said second range of wavelengths corresponds to the range from the blue light to the red light in the visible spectrum, and until the infrared light.

In a non-limitative embodiment, said wavelength conversion layer is composed of a substrate of quantum dots.

Quantum dots are good candidates for wavelength conversion due to the high values achieved for both the photoluminescent quantum yield (PLQY) and the external quantum efficiency (EQE), which depends on the thickness of the quantum dot layer stack or film. Likewise, the absorption of the latter film can be characterized by the optical density (OD), a quantity indicating the light absorbed by a material.

For instance, for a specific OD=3, which means that the 99.9% of the light has been absorbed, it is possible to calculate the thickness of the film, which results to be quite reduced for quantum dots in comparison with other technologies like phosphors. That thickness might be in the range of the nanometers (20-800) nm for quantum dots and in the range of millimeters for the phosphors (1-3) mm.

Additionally, if the encapsulation or extra barrier films are also considered, example numerical values above could be increased between 100 micrometers to 500 micrometers more. This advantage in material decrease for quantum dots is totally aligned with the carbon footprint reduction, bringing therefore a novel sustainable material to be incorporated in automotive applications.

In a non-limitative embodiment, said lighting device comprises a plurality of light sources and said light sources are configured to be activated and deactivated independently from each other.

In a non-limitative embodiment, said lighting device comprises three light sources, three optical lightguides, and wherein said stack comprises two wavelength conversion layers.

In a non-limitative embodiment, said stack comprises :
- a first wavelength conversion layer with quantum dots that are emitted in the red color emission wavelength, followed by
- a second wavelength conversion layer with quantum dots that are emitted in the green color emission wavelength.

In a non-limitative embodiment, said three light sources are blue lights.

In a non-limitative embodiment, said lighting device further comprises at least one folder.

In a non-limitative embodiment, said lighting device further comprises at least one collimator.

In a non-limitative embodiment, said lighting device further comprises a decorative element or is directly adjacent to a decorative element.

In a non-limitative embodiment, said lighting device is a lighting device of a vehicle.

In a non-limitative embodiment, said light source is a semiconductor source.

In a non-limitative embodiment, a PWM modulation is applied on the light sources.

In a non-limitative embodiment, said lighting device comprises as many optical lightguides as light sources.

In a non-limitative embodiment, said at least one optical lightguide is transparent or translucid. In a non-limitative embodiment, said at least one optical lightguide is of the same color of the quantum dots of the wavelength conversion layer to which it conveys the light rays of a corresponding light source.

In a non-limitative embodiment, said at least one optical lightguide is flexible or rigid.

In a non-limitative embodiment, two optical lightguides are composed of a core that possesses a reflective index that is greater than the reflective index of respectively said two wavelength conversion layers.

In a non-limitative embodiment, said at least one optical lightguide is made of a PMMA (Polymethyl Methacrylate) or PC(Polycarbonate) material.

In a non-limitative embodiment, the quantum dots are colloidal.

In a non-limitative embodiment, the substrate of a wavelength conversion layer comprises only one color of quantum dots.

In a non-limitative embodiment, the substrate of a wavelength conversion layer comprises a plurality of different colors of quantum dots.

In a non-limitative embodiment, the substrate comprises different color regions.

In a non-limitative embodiment, the substrate is embedded between two barrier films.

In a non-limitative embodiment, said lighting device comprises three folders.

In a non-limitative embodiment, said lighting device comprises three collimators.

In a non-limitative embodiment, the color filter has a same color as the quantum dots of the corresponding conversion wavelength layer.

In a non-limitative embodiment, the color filter has a different color than the quantum dots of the corresponding conversion wavelength layer.

In a non-limitative embodiment, the color filter is an optic filter. In non-limitative variant of embodiments, said optic filter is an interference filter, or a dichroic filter or a thin film filter.

In a non-limitative embodiment, the decorative element is printed on an optical lightguide of the lighting device. In a non-limitative variant of embodiment, it is printed in high definition.

There is also provided a lighting module for a vehicle, said lighting module comprising a lighting device according to any of the preceding characteristics, a housing that is configured to house said lighting device, and a carrier.

In a non-limitative embodiment, said lighting module is a lighting module of a vehicle.

In a non-limitative embodiment, said lighting module is a lamp of the vehicle, or a dashboard lighting module, or an interior element of the vehicle.

In a non-limitative embodiment, said lamp of the vehicle is a headlamp or a rear lamp.

In a non-limitative embodiment, said interior element of the vehicle is the roof, or the control panel, or a handle, or part of a door, or a dome element, or a projection element.

Some embodiments of methods and/or apparatus in accordance with embodiments of the present invention are now described, by way of example only, and with reference to the accompanying drawings, in which:
Figure 1 is a schematic diagram that illustrates a lighting device for a vehicle, according to a first non-limitative embodiment of the invention, said lighting device comprising one light source, one optical lightguide, and a stack with one wavelength conversion layer,
Figure 2a is a schematic diagram that illustrates a lighting device for a vehicle, according to a second non-limitative variant of a second non-limitative embodiment of the invention, said lighting device comprising two light sources, two optical lightguides, a stack with one wavelength conversion layer,
Figure 2b is a schematic diagram that illustrates a lighting device for a vehicle, according to a first non-limitative variant of a second non-limitative embodiment of the invention, said lighting device comprising two light sources, two optical lightguides, a stack with two wavelength conversion layers,
Figure 3 is a schematic diagram that illustrates a lighting device for a vehicle, according to a third non-limitative embodiment of the invention, said lighting device comprising three light sources, three optical lightguides, a stack with two wavelength conversion layers,
Figure 4 is a schematic diagram that illustrates the lighting device of figure 2a, according to a non-limitative variant embodiment, said lighting device further comprising one folder,
Figure 5 is a schematic diagram that illustrates the lighting device of figure 3, according to a first non-limitative variant of embodiment, said lighting device further comprising two folders,
Figure 6 is a schematic diagram that illustrates the lighting device of figure 3, according to a second non-limitative variant of embodiment, said lighting device further comprising two collimators,
Figure 7 is a schematic diagram that illustrates the lighting device of figure 3, according to a third non-limitative variant of embodiment, said lighting device further comprising at least on color filter,
Figure 8 is a schematic diagram that is illustrates the same arrangement of the elements of the lighting device of figure 7, save the position of a decorative element that is integrated in an optical lightguide of said lighting device,
Figure 9 illustrates a non-limitative example of a spectrum of a light beam output from a wavelength conversion layer of the stack of the lighting device of figures 1, 2a, 2b or 3.
Figure 10 illustrates a sectional view and an exploded view of this sectional view of some parts of a dashboard lighting module comprising the lighting device of figures 1, 2a, 2b or 3, according to a non-limitative embodiment,

In the following description, well-known functions or constructions by the man skilled in the art are not described in detail since they would obscure the invention in unnecessary detail.

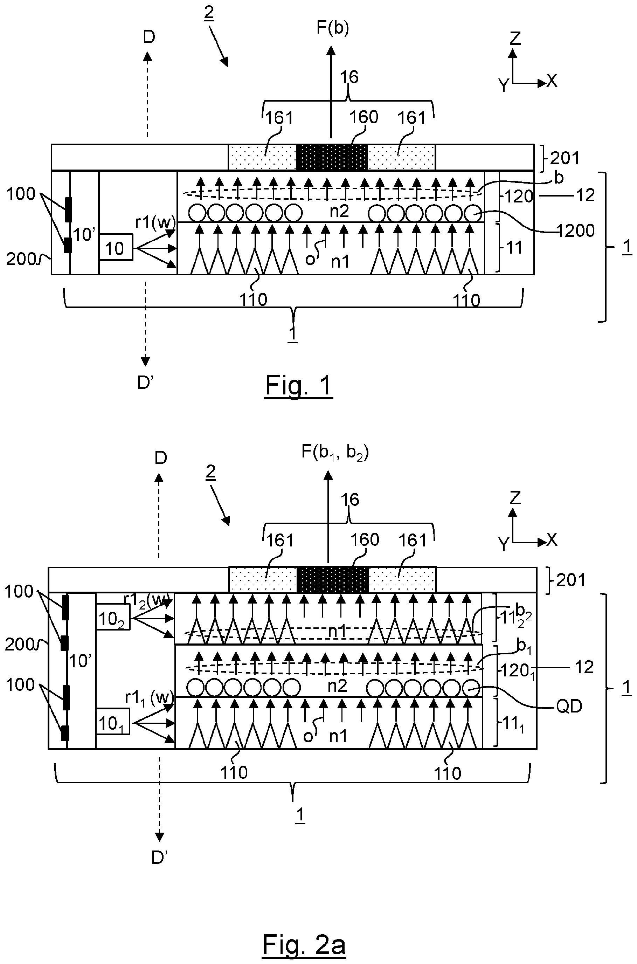

The present invention relates to a lighting device 1 for a vehicle, said lighting device 1 being described in reference to figures 1 to 10, according to non-limitative embodiments.

In non-limitative embodiments, the vehicle is a motor vehicle, an electrical vehicle or a hybrid vehicle.

The lighting device 1 provides light for the interior lighting or for lighting modules such as a headlamp or a rear lamp, or any other lighting modules for the vehicle. In non-limitative embodiments, the lighting device 1 is part of a lighting module 20 of the vehicle. In non-limitative examples, the lighting module 20 is :
- any type of lamp such as in non-limitative examples a headlamp, or a rear lamp, or
- a dashboard lighting module, or,
- an interior element of the vehicle. In non-limitative examples, the interior element is the roof, the control panel, a handle, part of a door, a dome light, a projection light, etc.

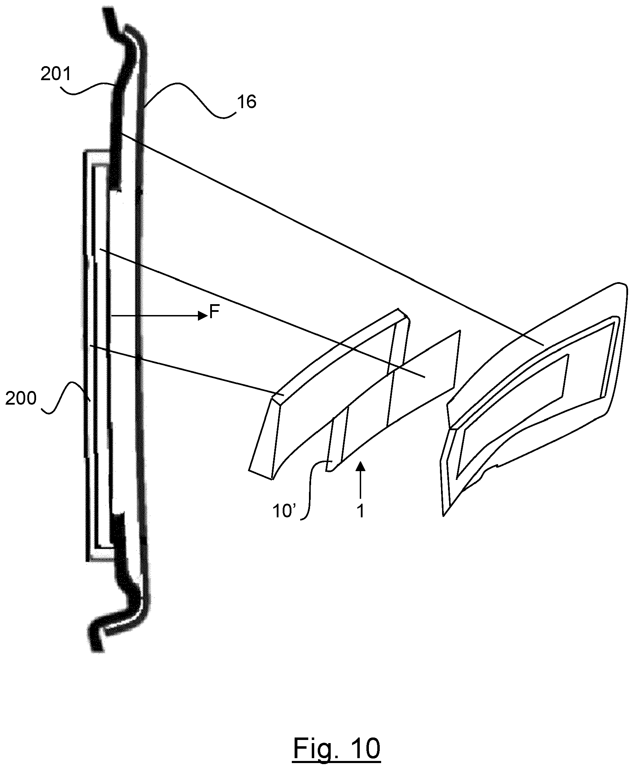

Figure 10 illustrated some elements of a lighting module 20 that is a dashboard lighting module. It comprises a housing 200 and a carrier 201. The housing 200 is configured to receive the lighting device 1. A decorative element 16 described later in the following is also illustrated.

As illustrated in figure 1 to 8, the lighting device 1 comprises a first direction D and a second direction D' opposed to the first direction D. The first direction D is the direction that is facing the exterior of the vehicle when the lighting device 1 is a headlamp or a rear lamp for example. The first direction D is the direction that is facing the vehicle interior when the lighting device 1 is a dashboard lighting module or an interior element of the vehicle.

The lighting device 1 is configured to emit an emergent light beam F (also called in the following global light beam F ) throughout the carrier 201 of the lighting module 20 and the decorative element 16 along the first direction D.

The lighting device 1 extends in height along a vertical direction Z that is parallel to the first direction D and in width along a first horizontal direction X that is perpendicular to the vertical direction X, and in depth along a second horizontal direction Y that is perpendicular to the vertical direction Z and the first horizontal direction X.

As illustrated in figures 1 to 8, the lighting device 1 comprises :
- at least one light source 10,
- at least one optical lightguide 11,
- a stack 12 of at least one wavelength conversion layer 120.

In a first non-limitative embodiment illustrated in figure 1-8, the wavelength conversion layer 120 has a thickness between (20-800) nm nanometers if the encapsulation or extra barrier films are not considered and could reach the range of (100-500) micrometers if the encapsulation or extra barrier films are considered.

The lighting device 1 further comprises an electronic support 10' and electronic components 100.

lt is to be noted that the housing 200 and the carrier 201 of the lighting module 20 are also illustrated in figures 1 to 8.

These different elements of the lighting device 1 are described in detail in the following.

### Light source 10:

The lighting device 1 comprises one or a plurality of light sources 10 (illustrated in figures 1 to 8).

In a first non-limitative embodiment illustrated in figure 1, the lighting device 1 comprises only one light source 10. In a non-limitative example, it is the case when the lighting module 20 where the lighting device 1 is integrated, is a door handle lighting module.

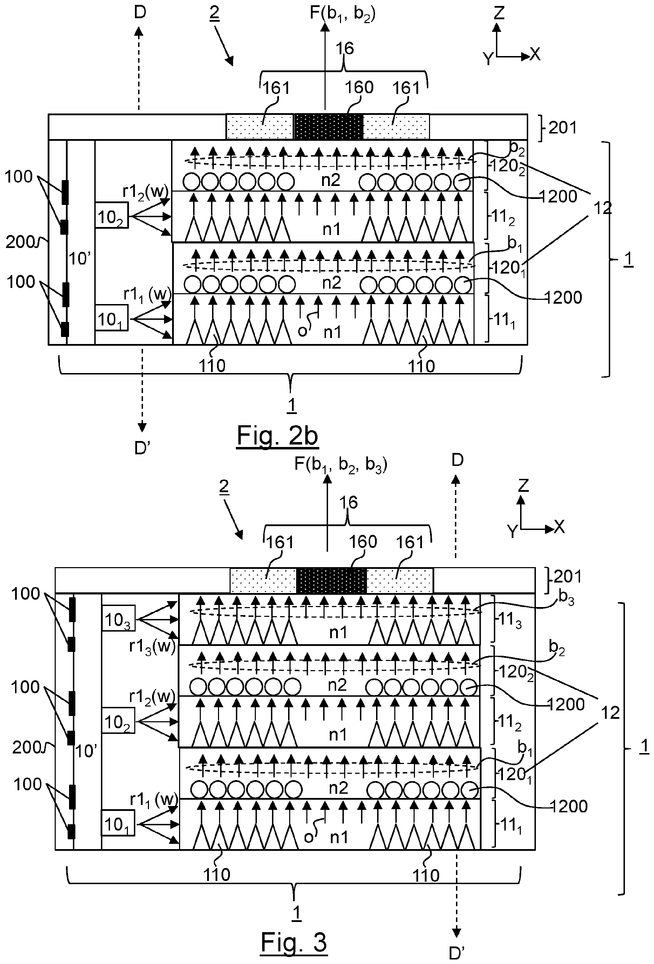

In a second non-limitative embodiment illustrated in figures 2a and 2b, the lighting device 1 comprises two light sources 10. In a non-limitative example, it is the case when the lighting module 20 where the lighting device 1 is integrated, is a dashboard lighting module.

In a third non-limitative embodiment illustrated in figure 3, the lighting device 1 comprises three light sources 10.

Each light source 10 is configured to illuminate one optical lightguide 11.

Hence, in the first non-limitative embodiment of figure 1, the only light source 10 is configured to illuminate the only optical lightguide 11 illustrated. In the second non-limitative embodiment of figures 2a and 2b, the two light sources 10 are configured to illuminate respectively the two optical lightguides 10 illustrated. In the third non-limitative embodiment of figure 3, the three light sources 10 are configured to illuminate respectively the three optical lightguides 10 illustrated.

In a non-limitative embodiment, the lighting device 1 comprises a row of a plurality of light sources 10 that is configured to illuminate one optical lightguide 11. Hence, in the first non-limitative embodiment of figure 1, the only light source 10 can be replaced by one row of light sources 10. In the second non-limitative embodiment of figures 2a and 2b, the two light sources 10 can be replaced respectively by two rows of light sources 10. In the third non-limitative embodiment of figure 3, the three light sources 10 can be replaced respectively by three rows of light sources 10.

In a non-limitative embodiment, a light source 10 is a semiconductor source. In non-limitative variants of embodiment, the light source 10 is a light emitting diode or a laser diode. By light-emitting diode, one means any type of light-emitting diode, whether in non-limiting examples LED ("Light Emitting Diode"), OLED ("Organic LED"), AMOLED (" Active-Matrix-Organic LED" in English), or even FOLEDs ("Flexible OLED" in English). In another non-limitative embodiment, the light source 10 is a laser light source. It is to be noted that some laser light sources are not semiconductor sources. It is to be noted that some kind of laser light source are naturally collimated.

The light source 10 is configured to emit light rays r1 according to a first range of wavelengths w.

As illustrated in figures 1 to 8, the light source 10 is configured to emit the light rays r1 along the horizontal direction X so that they enter into a corresponding optical lightguide 11.

In a non-limitative embodiment, the light source 10 is monochromatic.

In a non-limitative embodiment, the first range of wavelengths w corresponds to one of the ranges of the blue light, of the red light, or of the green light. Hence, the light source 10 comprises only one monocolor emitter. Hence, light rays r1 are emitted according to said first range of wavelengths w, instead of a mixture of different range of wavelengths such as a white light.

In a non-limitative variant of embodiment, the first range of wavelengths w corresponds to the range of blue light. With the blue light, one can obtain all the gamut colors from blue to red in the visible spectrum (that is to say between 400 nanometers (nm) and 700 nanometers), contrary to a green light or red light only. Indeed, the blue light can excite the "Green" and "Red" quantum dots of a wavelength conversion layer 120 described later in the following. It is not the case for the green light or red light.

So, depending on the lighting functionality and colors that are needed, one can choose the green light or red light or blue light. It is to be noted that the first range of wavelengths w corresponding to deep blue or even ultraviolet can also be used. Generally speaking, with a first range of wavelengths w, one can obtain a lower energy second range of wavelengths w'. In a non-limitative example, with 700nm, one can obtain a second range of wavelengths w' from 700nm to 1000nm. In another non-limitative example, with 400nm, one can obtain from 400nm to 1000nm.

In a non-limitative embodiment, the lighting device 1 comprises a plurality of light sources 10. In a non-limitative embodiment, the light sources 10 are configured to be activated and deactivated (aka switch on and switch off) independently from each other.

Hence, depending also of the lighting functionality and colors that are need, one can choose to activate one or a plurality of light sources 10 in any chosen combination.

### Electronic support 10'

The electronic support 10' is illustrated in figures 1 to 8.

The electronic support 10' is configured to receive the light source(s) 10. In a non-limitative embodiment illustrated, it extends along the vertical direction Z. It is configured to receive the light source(s) 10. In another non-limitative embodiment not illustrated, it extends along the horizontal direction X. In a non-limitative variant of embodiment, the lighting device 1 comprises a plurality of electronic supports 10', each one supporting one light source 10.

In a non-limitative embodiment, the electronic support 10' is a Printed Circuit Board Assembly (PCBA). The electronic support 10' is configured to also receive all the electronic components 100 needed to control the light source(s) 10. The electronic support 10' possesses two sides opposite to each other. In non-limitative embodiments, the electronic components 100 are placed on the same side as the light source(s) 10 or on the opposite side. In the non-limitative example illustrated in the figures, they are placed on the opposite side.

### Optical lightguide 11

The optical lightguide 11 extends along the horizontal direction X. In a non-limitative embodiment illustrated, it thus extends perpendicular to the electronic support 10'. In another non-limitative embodiment not illustrated, it extends parallel to the electronic support(s) 10'.

The lighting device 1 comprises one or a plurality of optical lightguides 11 (illustrated in figures 1 to 8). The lighting device 1 comprises as many optical lightguides 11 as light sources 10. Each optical lightguide 11 has a corresponding light source 10.

The optical lightguide 11 and the stack 12 (described later in the following) are useful for transforming the light rays r1 emitted by a light source 10 into an acceptable light pattern for a lighting functionality chosen for the lighting device 1.

The optical lightguide 11 is configured to receive the light rays r1 (also called incoming light rays r1 later in the following) from one light source 10 or from one row of light sources 10, and to guide them according to an orientation o (illustrated in figures 1 to 8 as small black arrows). In a non-limitative embodiment, it conveys them to the stack 12. For simplicity, only the orientation o performed by one optical lightguide 11 has been illustrated.

In a non-limitative embodiment, the orientation o is of 90° from the incoming light rays r1. This non-limitative embodiment is taken as a non-limitative example in the following.

In a first non-limitative embodiment illustrated in figure 1, the lighting device 1 comprises one optical lightguide 11 that is configured to receive the light rays r1 of one light source 10 and to orientate them at 90° towards a wavelength conversion layer 120 of the stack 12.

In a second non-limitative embodiment illustrated in figures 2a and 2b, the lighting device 1 comprises two optical lightguides 11.

In a first non-limitative variant of embodiment illustrated in figure 2a :
- a first optical lightguide 11₁ is configured to receive the light rays r1₁ of a first light source 10₁ and to orientate them at 90° towards a first wavelength conversion layer 120₁ of the stack 12, and
- a second optical lightguide 11₂ is configured to receive the light rays r1₂ of a second light source 10₂ and to orientate them at 90° towards the first direction D and partly through a decorative element 16.

In other words, in this first non-limitative embodiment, one optical lightguide 11 is configured to convey the light rays r1 of a light source 10 to a specific location of the stack 12, and the second optical lightguide 11 is configured to bring the light rays r1 of another light source 10 to the decorative element 16.

In a second non-limitative variant of embodiment illustrated in figure 2b :
- a first optical lightguide 11₁ is configured to receive the light rays r1₁ of a first light source 10₁ and to orientate them at 90° towards a first wavelength conversion layer 120₁ of the stack 12, and
- a second optical lightguide 11₂ is configured to receive the light rays r1₂ of a second light source 10₂ and to orientate them at 90° towards a second wavelength conversion layer 120₂ of the stack 12.

In other words, in this second non-limitative embodiment, the two optical lightguides 11 are configured to convey the light rays r1 of two light sources 10 to respectively different specific locations of the stack 12.

In a third non-limitative embodiment illustrated in figure 3, the lighting device 1 comprises three optical lightguides 11 :
- a first optical lightguide 11₁ is configured to receive the light rays r1₁ of a first light source 10₁ and to orientate them at 90° towards a first wavelength conversion layer 120₁ of the stack 12, and
- a second optical lightguide 11₂ is configured to receive the light rays r1₂ of a second light source 10₂ and to orientate them at 90° towards a second wavelength conversion layer 120₂ of the stack 12, and
- a third optical lightguide 11₃ is configured to receive the light rays r1₃ of a third light source 10₃ and to orientate them at 90° towards the first direction D and partly through a decorative element 16.

In other words, in this third non-limitative embodiment, two optical lightguides 11 are configured to convey the light rays r1 of two light sources 10 to respectively different specific locations of the stack 12, and the third optical lightguide 11 is configured to bring the light rays r1 of the third light source 10 to the decorative element 16. This third non-limitative embodiment permits obtaining color within the whole RGB gamut of colors.

In a non-limitative embodiment, the optical lightguide(s) 11 is composed of a core that possesses a reflective index n1 that is greater than the reflective index n2 of the corresponding wavelength conversion layer(s) 120 of the stack 12. By "corresponding", one means the wavelength conversion layer(s) 120 to which the optical lightguide(s) 11 conveys the light rays r1. It permits the light to be guided through the core which acts as an optical waveguide.

In a non-limitative embodiment, the optical lightguide(s) 11 is transparent or translucid or of the same color of the quantum dots (described later in the following) of the wavelength conversion layer 120 to which it conveys the light rays r1 of a corresponding light source 10.

In a non-limitative embodiment, the optical lightguide(s) 11 is a flexible optical lightguide. In another non-limitative embodiment, the optical lightguide(s) 11 is a rigid optical lightguide.

As illustrated in figures 1 to 8, the optical lightguide(s) 11 comprises microstructures or nanostructures 110 that permit the deviation of the incoming light rays r1 at 90° (in the non-limitative given example). In figures 1 to 8 the microstructures or nanostructures 110 are illustrated in form of triangles. For the sake of clarity of the figures, only two microstructures or nanostructures 110 have been referenced 110 in one optical lightguide 11.

In a non-limitative embodiment, the microstructures 110 are obtained by a mechanical drilling process. In a non-limitative embodiment, the nanostructures are obtained by a laser process. In a non-limitative embodiment the microstructures are about 10⁻⁶ meters, and the nanostructures are about 10⁻⁹ meters. The micro/nanostructures 110 permits to obtain a homogenous light beam b and therefore to produce a homogeneous global light beam F that is composed of one or a plurality of light beams b.

In a non-limitative embodiment, when the lighting device 1 comprises a plurality of optical lightguides 11, the micro/nanostructures 110 are displaced and/or have different shapes with respect to the different optical lightguides 11 so as to create a dephasing in space to further avoid light crosstalk in normal direction, aka in the first direction D and to increase the degree of homogeneity of the global light beam F. This permits creating different light effects at the output of the lighting device 1 for the global light beam F. In a non-limitative example, one can create a direct path for a red light at the output of the lighting device 1. In this manner, less energy is lost from the wavelength conversion layer referred to 120₁ (also called bottom wavelength conversion layer referred to 120₁) in the figures 1 to 8.

In non-limitative embodiments, the optical lightguide(s) 11 is made of a PMMA or PC material.

In a non-limitative embodiment, the optical lightguide(s) 11 is protected by a transparent layer (not illustrated) with materials able to confine the light inside the optical lightguide 11. The transparent layer is placed on the surface of the optical lightguide 11 save the location of the micro/nanostructures 110. In non-limitative embodiment, the transparent layer is made of a PMMA or PC material. In non-limitative embodiments, the transparent layer is placed on the surface of the optical lightguide 11 by mechanical sticking, overmoulding, and thin film techniques like physical vapor deposition.

### Stack 12:

The stack 12 (illustrated in figures 1 to 8) in combination with the light source(s) 10 is in charge of providing a suitable color(s) for the lighting functionality of the lighting device 1.

The stack 12 comprises at least one wavelength conversion layer 120 that is configured to receive the light rays r1 from at least one optical lightguide 11 according to the orientation o and to transform them into a light beam b according to at least one second range of wavelengths w' so as to produce the emerging light beam F. According to at least one second range of wavelengths w' means that the spectrum of the light beam b comprises one or a plurality of second ranges wavelengths w'. Hence, the emerging light beam F is formed of one or a plurality of light beams b.

When the spectrum of the light beam b comprises a plurality of second ranges of wavelengths w', it means that the quantum dots (described later in the following) composing the substrate (described later in the following) of the wavelength conversion layer 120 are from different colors. The quantum dots produce a color when they are excited.

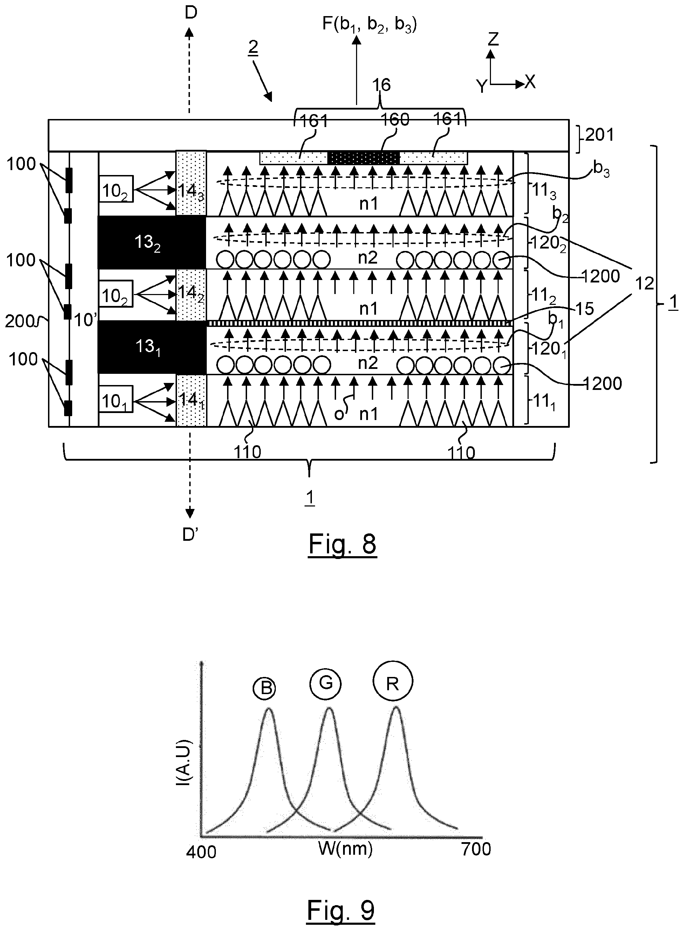

Figure 9 illustrates a non-limitative example of the spectrum of a light beam b that contains three wavelengths Blue, Red and Green referred to as respectively B, R, G. In the x axis is the wavelength W in nanometers (nm) and in the y axis is the intensity I in Arbitrary Units (A.U).

In non-limitative embodiment, the second range of wavelengths w' corresponds to the range from the blue light to the red light in the visible spectrum, and until the infrared light. It is to be reminded that the range of infrared light is about 700 to 1000 nanometers. The visible spectrum is also called visible RGB spectrum in the following.

The stack 12 is hence a stack of one or a plurality of wavelength conversion layers 120. It is to be noted that when the stack 12 comprises a plurality of wavelength conversion layers 120, said wavelength conversion layers 120 are not directly adjacent with each other as they are separated by an optical lightguide 11 as illustrated in figures 2b and 3.

The wavelength conversion layer(s) 120 extends along the horizontal direction X, thus is perpendicular to the electronic support 10'.

As mentioned before, a wavelength conversion layer 120 is configured to transform the light rays r1 into at least one light beam b according to at least a second range of wavelengths w'. When the stack 12 comprises one wavelength conversion layer 120, one can obtain one or a plurality of second ranges of wavelengths w'. One obtains a plurality of second ranges of wavelengths w' when the wavelength conversion layer 120 efficiency is less than 100% or if there are two light sources 10 and only one wavelength conversion layer 120. 100% means that all input photons with the first range of wavelengths w convert to the second range of wavelengths w'. Less than 100% means that there will be input photons that will be at the output also and will mix with the converted output light. In a non-limitative example, when the input light is blue (aka the first range of wavelengths w) and the quantum dots 1200 are red, if the Quantum Yield (aka efficiency) is 100%, the output light (aka the color of the global light beam F) will be red : one obtains one second range of wavelengths w'. If the Quantum Yield is less than 100%, the output light will be a mix between blue and red : one obtains a mix of two second ranges of wavelengths w'.

When the stack 12 comprises a plurality of wavelength conversion layers 120, one can also obtain one or a plurality of second ranges of wavelengths w'. One has the same second range of wavelengths w' if the plurality of wavelength conversion layers 120 transform the different light rays r1 of the corresponding light sources 10 into a plurality of light beams b according to the same range of wavelengths w'.

A wavelength conversion layer 120 is composed of quantum dots 1200 that are deposited on a substrate layer. In non-limitative embodiments, the substrate layer is transparent or translucid. In another non-limitative embodiment, the substrate layer is in the same color of the quantum dots 1200. In this way, the own layer deposition can act as a color filter. In a non-limitative embodiment, the substrate layer is an optical lightguide 11. So, the quantum dots 1200 are deposited directly on a surface of the optical lightguide 11. The optical lightguide 11 integrates the quantum dots 1200. Instead of having two parts to be considered in the whole assembly process, only one part is to be considered as the quantum dots 1200 are integrated in the optical lightguide 11.

The deposition of QDs is easy and not time consuming and is not very expensive compared to a thermoform process. In non-limitative embodiments, the deposit is performed by thin film techniques like spin coating, doctor-blade, ink printing, screening etc.

Said quantum dots 1200 are also referred to as QD in the following. The QD are illustrated in form of circles in figures 1 to 8. For the sake of clarity of the figures, only one QD per wavelength conversion layer 120 has been referenced 1200. By abuse of language and for the sake of simplification, in the following the substrate layer is also called substrate 1200. The QDs are in the nanometric size.

In a non-limitative embodiment, the QDs are colloidal. These colloidal QDs are interesting in automotive applications since it is possible to deposit them in large surfaces, using thin film deposition techniques like drop casting, spin coating, spray coating, screen printing, lithography or ink-printing, during the fabrication process. It allows a great flexibility in the design.

A QD is an electronic structure obtained out of a semiconductor nanocrystal, with a size such that its electrons and holes are confined in all three spatial dimensions. When a QD is excited with light of one wavelength, one obtains another wavelength depending on the size of the QD. Depending on the particular sizes of the QDs, they emit light in a particular wavelength when they are excited, either electrically or luminescently. Note that when the QDs are excited with light, photoluminescence physical phenomenon occurs. When they are excited by electrical current, electroluminescence physical phenomenon occurs. As a consequence, "Red" quantum dots would be quantum dots which emit light in the red color emission wavelength (also called red color wavelength or simply red wavelength) when excited, "Green" quantum dots would be quantum dots which emit light in the green color emission wavelength (also called green color wavelength or simply green wavelength) when excited, etc. It is the same for other color emission wavelengths such as yellow, orange, etc. One can sweep all monochromatic color wavelengths.

It is to be noted that "Red" quantum dots can be excited by a higher energy color. Thus, they can be excited by a blue light source 10 or a green light source 10. In the same manner, "Green" quantum dots can be excited by a higher energy color. Thus, they can be excited only by blue light source 10. A red light source 10 can't excite the "Green" quantum dots. It means that only a blue light source 10 can excite "Red" quantum dots and "Green" quantum dots. The energy depends of a bandgap in the semiconductor nanocrystal of each QD. The bigger the bandgap is, the higher the energy is.

In a first non-limitative embodiment illustrated in figure 1 or figure 2a, the stack 12 comprises one wavelength conversion layer 120₁ with quantum dots 1200 that are emitted in the red color emission wavelength, or in the green color emission wavelength depending on the color one wants to obtain for the global light beam F. In this case, the light source 10 is blue or green if the quantum dots 1200 are "Red", and blue if the quantum dots 1200 are "Green". It is to be noted that a blue light source 10 is more efficient as the "stokes shift effect" is higher. Also, it will be cheaper to buy only blue light sources 10.

In a second non-limitative embodiment illustrated in figure 2b or 3, the stack 12 comprises two wavelength conversion layers 120 :
- a first wavelength conversion layer 120₁ with quantum dots that are emitted in the red color emission wavelength, followed by
- a second wavelength conversion layer 120₂ with quantum dots that are emitted in the green color emission wavelength.

In this case, the corresponding light source 10 is blue or green if the quantum dots 1200 are "Red", and blue if the quantum dots 1200 are "Green". In a non-limitative embodiment, the corresponding light sources 10 are blue. The expectation is that all blue light coming from the light sources 10₁, and 10₂ illustrated in figure 2b and 3 are respectively converted in Red by the first wavelength conversion layer 120₁ and in Green by the second wavelength conversion layer 120₂. This arrangement permits generating the whole color RGB gamut for the global light beam F.

It is to be noted that in the non-limitative embodiment of figure 3, the first wavelength conversion layer 120₁ with "Red" quantum dots is placed at the bottom of the lighting device 1. By "bottom", one means that it is turned towards the second direction D'. Hence, the lighting device 1 comprises the "Red" quantum dots 1200 at the bottom, followed by the "Green" quantum dots 1200, followed by finally a blue native light on top, said blue native light coming from a blue light source 10₃ whose light rays r1 cooperate with an optical lightguide 11 which guides the light outside the lighting device 1 through the decorative element 16.

Hence, in the non-limitative embodiment illustrated in figure 3 :
- the blue light emitted by the first light source 10₁ at the bottom leaves the first optical lightguide 11₁ through the micro/nanostructures 110 at 90° and is converted into red light beam b1,
- the blue light emitted by the second light source 10₂ leaves the second optical lightguide 11.2 through the micro/nano structures 110 at 90° and is converted into green light beam b2,
- the blue light emitted by the third light source 10₃ at the top leaves the third optical lightguide 11.2 through the micro/nano structures 110 at 90° and is not converted but forms a third blue light beam b3.

In a first non-limitative embodiment, the substrate 1200 of a wavelength conversion layer 120 comprises only one color of QDs, that is to say QDs of the substrate 1200 are tuned to only one color.

In a first non-limitative example, with "Red" QDs excited with blue light, one obtains a pure red color at the output of the wavelength conversion layer 120 if the absorption of the wavelength conversion layer 120 is 100%. If there is some blue leakage, meaning that the absorption is not 100%, one obtains a pink color at the output of the wavelength conversion layer 120.

In a first non-limitative example, with "Red" QDs excited with green light, one obtains a yellowish color at the output of the wavelength conversion layer 120 if there is some red leakage or a mix of green leakage. It is to be noted that if the green light is totally absorbed by the "Red" QDs, one obtains a red color at the output of the wavelength conversion layer 120.

In a second non-limitative embodiment, the substrate 1200 of a wavelength conversion layer 120 comprises a plurality of different colors of QDs, that is to say QDs of the substrate 1200 are tuned to different colors.

In a non-limitative example, the substrate 1200 comprises Red and Green QDs when the first wavelength w corresponds to the range of blue light. It means that they are excited by a blue light. It permits having a light beam b in the range from blue to red light in the visible spectrum. Depending on the blue light absorption and the quantity or density of each red and green QDs, one can obtain a white color at the output of the wavelength conversion layer 120.

It is to be noted that the more the density of the QDs is in the substrate 1200, the more the green and the red are excited, the less there is blue light. Indeed, some of the blue light is not absorbed by the QDs so that one obtains a blue color, and some of the blue light is absorbed by the quantum QDs which leads to a conversion of the blue light into the red and green colors. It is to be noted that blue QDs are not needed because the blue light is generated already by the light source 10. We call it blue native light.

In a non-limitative embodiment, the substrate 1200 comprises different color regions also called color zones. One can create different color regions by doping the substrate 1200 with different QDs deposition in different regions. Hence, in a non-limitative embodiment, the substrate 1200 comprises a combination of different sizes of QDs and/or of different material for the QDs in specific regions to obtain different colors in these different regions.

In summary, the color(s) of one light beam b at the output of on wavelength conversion layer 120 is obtained by the combination of the QDs in the wavelength conversion layer 120 which are excited by a color of a light source 10, all the QDs emitting light in the same color emission wavelength or in different color emission wavelengths, thus creating a light beam b according to one or a plurality of second ranges of wavelength w'.

In a non-limitative embodiment, each QD comprises a core and a shell or several shells. The QDs acts as the core and is covered with a shell that acts as a passivation element for the core, to increase the quantum confinement and therefore reduce the number of dangling bonds which causes a low value in the QY (quantum yield) parameter.

In a non-limitative embodiment, the core is spherical or pyramidal.

In non-limitative embodiments, the core comprises a combination of at least two elements from the list: In, P, Zn, Se, Cu, S, Mn and the shell comprises a combination of at least two elements from the list : Zn, Se and S. These materials have been proven to be suitable for the automotive application.

In non-limitative embodiments, the core/shell quantum dots are formed by CuInS2/ZnS or InP/ZnS. These QDs do not contain heavy metal. They are called Cd-free QDs. These particular materials and their alloys have been proved to be suitable for automotive purposes since they are compliant with international norms applied to automotive components like Global Automotive Declarable Substance List (GADSL) or Restriction of Hazardous Substances (RoHS). Moreover, these particular alloys are able to cover the visible spectrums, and also the invisible spectrum such as near infrared (NIR) or infrared (IR), which is interesting for automotive lighting applications. In addition, these alloys offer high values of photoluminescence quantum yield (PL QY) at low full width half maximum (FWHM) values, which implies a high efficiency and high purity of color achieved. To be more precise, CuInS2 has a spectrum range from green (around 500nm) to infrared (above 700 nm), a photoluminescence quantum yield (PL QY) more than 90% and full width half maximum (FWHM) less than 100 nm. As for InP, we have a spectrum range usually from green (around 500 nm) to red (above 600 nm), a photoluminescence quantum yield (PL QY) more than 85% and full width half maximum (FWHM) less than 50 nm.

In a non-limitative embodiment, the substrate 1200 is embedded between two barrier films (not illustrated). In a non-limitative embodiment, the two barrier films are made of PET (Polyethylene Terephthalate), which confers stability against environmental conditions (temperature, humidity ...) and protection to the substrate 1200.

### Folder 13

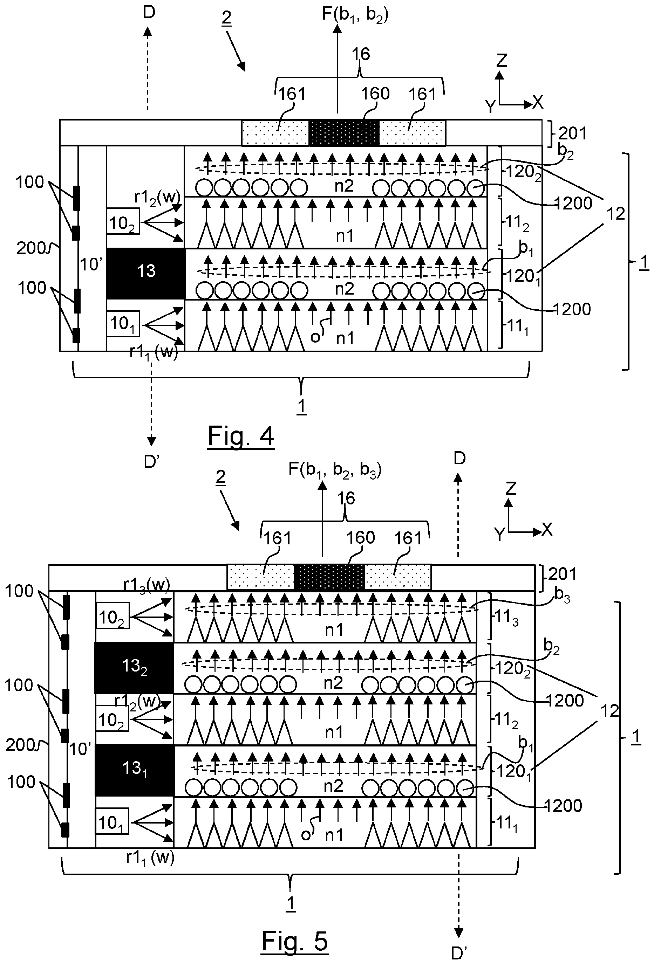

In a non-limitative embodiment, the lighting device 1 further comprises at least one folder 13. The folder 13 is illustrated in figures 4 to 6.

The folder 13 permits the confinement of the light emitted by a light source 10 in each corresponding optical lightguide 11 and permits avoiding light crosstalk between the different layers of the lighting device 1. The folder(s) 13 acts as a mechanical filter.

In a first non-limitative embodiment illustrated in figure 4, the lighting device 1 comprises one folder 13 that is configured to avoid light crosstalk between the bottom wavelength conversion layer 120₁ and the top wavelength conversion layer 120₂ of the stack 12, and avoid light crosstalk between the light source 10₁ and the top wavelength conversion layer 120₂. Indeed, if there is no good light incoupling between the light source 10₁ and the lightguide 11₁, leakage light could go directly to lightguide 11₂ and therefore excite the QDs in wavelength conversion layer 120₂. So, we could have an undesirable mix of color from wavelength conversion layer 120₁ and wavelength conversion layer 120₂, which would be excited by light source 10₁.

In a second non-limitative embodiment illustrated in figure 5, the lighting device 1 comprises two folders 13 :
- a first folder 13, that is configured to avoid light crosstalk between the bottom wavelength conversion layer 120₁ and the top layer wavelength conversion layer 120₂ of the stack 12, and avoid light crosstalk between the light source 10₁ and the intermediate wavelength conversion layer 120₂,
- a second folder 13₂ that is configured to avoid light crosstalk between the light source 10₂ and the top optical light guide 11₃.

To sum-up, the light source 10ᵢ (with i a whole natural number) should excite the lightguide 11ᵢ but no other one. So by adding the folder(s) 13, one can anticipate to avoid leakage of light.

Hence, for example, it avoids contamination of the blue light emitted by any light source 10 (when some blue light sources 10 are used) from one wavelength conversion layer 120 to another following wavelength conversion layer 120.

### Collimator 14

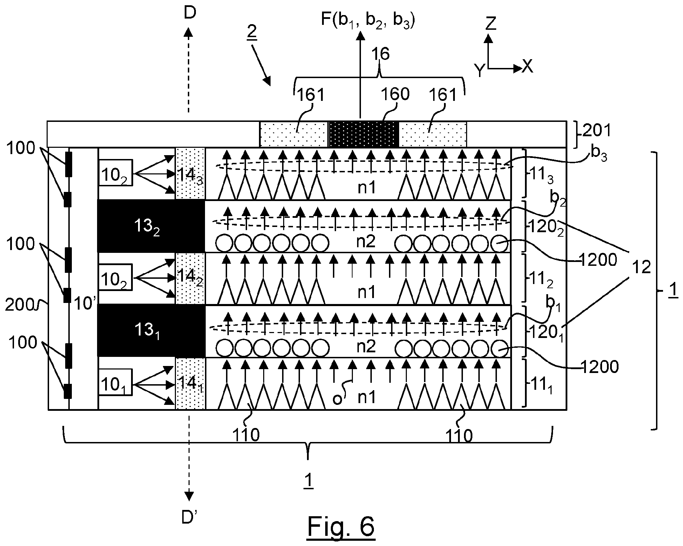

The lighting device 1 further comprises at least one collimator 14. The collimator 14 is illustrated in figure 6.

The collimator 14 permits to have a normal incidence in the incoming light forms by the incoming light rays r1 of a light source into the corresponding optical lightguide 11.

In a non-limitative embodiment illustrated in figure 6, the lighting device 1 comprises three collimators 14₁, 14₂, 14₃ placed in regards respectively to the three light sources 10₁, 10₂, 10₃. They are placed between the light sources 10 and the corresponding optical lightguides 11₁, 11₂, 11₃.

### Color wavelength filter 15

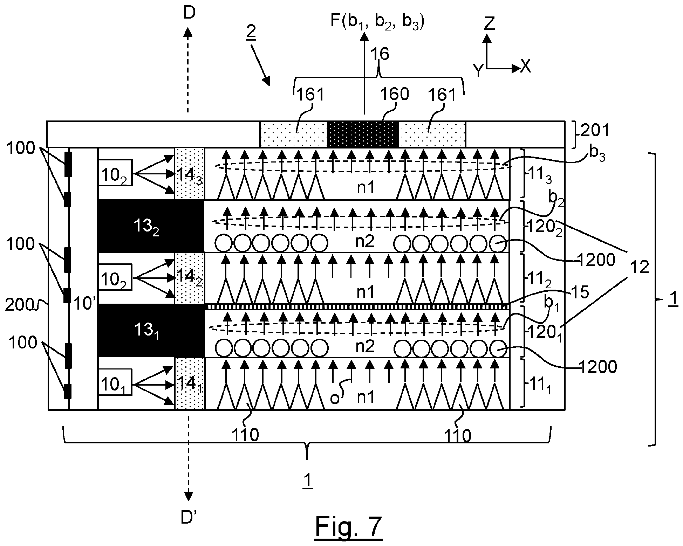

In a non-limitative embodiment, the lighting device 1 further comprises at least one color wavelength filter 15 (also called color filter 15 in the following). The color wavelength filter 15 is illustrated in figures 7 and 8.

In a non-limitative embodiment, the color wavelength filter 15 is a film placed on a surface of a conversion wavelength layer 120.

The color wavelength filter 15 avoids leakage of light coming from a light source 10 that could go through a conversion wavelength layer 120 to an upper optical lightguide 11.

In the non-limitative embodiment of figure 7 which illustrates the third non-limitative embodiment of the lighting device 1 of figure 3, the lighting device 1 further comprises one color filter 15 arranged between the first conversion wavelength layer 120₁ and the second optical lightguide 11₂. Thanks to this color filter 15, the light coming from the first light source 10₁ doesn't leak to this upper second optical lightguide 11₂.

In a first non-limitative embodiment, the color filter 15 has a same color as the QDs of the corresponding conversion wavelength layer 120₁, that is to say the conversion wavelength layer 120₁ on which it is laid on. Hence, if the QDs are "Red", the color filter 15 is red. If the QD's are "Green", the color filter 15 is green.

In a second non-limitative embodiment, the color filter 15 has a different color than the QDs of the corresponding conversion wavelength layer 120. It is possible if it is able to block the light of the light source 10 but let the other colors pass. Hence, if the QDs are "Red" or "Green" and the light of the light source 10 is blue, the color filter 15 is yellow in a non-limitative embodiment.

In a third non-limitative embodiment, the color filter 15 is an optic filter. In non-limitative variant of embodiments, said optic filter 15 is an interference filter, or a dichroic filter or a thin film filter. It reflects some color emission wavelengths of light and transmits others with almost no absorption for all color emission wavelengths of interest.

### Decorative element 16

In a non-limitative embodiment, the lighting device 1 further comprises a decorative element 16 or is directly adjacent to a decorative element 16.

The decorative element 16 is an added decorative material that acts as a mask to create a final shape to be observed by an observant external to the vehicle. In non-limitative embodiments, it is printed, overmoulded, or stacked. It comprises opaque parts 160 which form decorative areas, and transparent or translucent parts 161 or open areas instead of the transparent or translucent parts. The transparent or translucent parts 161 or open areas are able to let the light pass through.

It is to be noted that in regards to the opaque parts 160 of the decorative element 16, there is no need to have QDs and micro/nanostructures 110 in the normal projection of the opaque parts 160, as one do not need to illuminate those opaque parts 160 which form the decorative areas.

In a first non-limitative embodiment, the decorative element 16 is adjacent to the lighting device 1 and is integrated in the carrier 201 of the lighting module 20 as illustrated in figures 1 to 7, or is adjacent to the lighting device 1 and is added as an additional part of the lighting module 20 as illustrated in figure 10. In a non-limitative embodiment, the decorative element 16 is made of PC material. The decorative element 16 is directly adjacent to the part of the lighting device 1 where the light goes out. Hence, in the first non-limitative embodiment of the lighting device 1 illustrated in figure 1, the decorative element 16 is directly adjacent to the wavelength conversion layer 120. Hence, in the first non-limitative variant embodiment of the second non-limitative embodiment of the lighting device 1 illustrated in figure 2a, the decorative element 16 is directly adjacent to the second optical lightguide 11₂, aka the top one. Hence, in the second non-limitative variant embodiment of the second non-limitative embodiment of the lighting device 1 illustrated in figure 2b, the decorative element 16 is directly adjacent to the second wavelength conversion layer 120₂, aka the top one. Hence, in the third non-limitative embodiment of the lighting device 1 illustrated in figure 3, the decorative element 16 is directly adjacent to the third optical lightguide 11₃, aka the top one.

In a second non-limitative element illustrated in figure 8, the decorative element 16 is part of an optical lightguide 11 of the lighting device 1. In a non-limitative variant of embodiment, the decorative element 16 is part of the top optical lightguide 11, here the third optical lightguide 11₃ illustrated in figure 8. In this second non-limitative embodiment, in a non-limitative variant of embodiment, it is printed on the optical lightguide 11 to reduce the cost. It permits creating directly the decorative element 16 in the last layer of the lighting device 1. There is no need to add extra elements.

Hence, with the different elements of the lighting device 1 above described, the lighting device 1 is able to produce the global light beam F that emerges from the lighting device 1 with at least one second range of wavelengths w', in particular in the visible RGB spectrum.

Hence, the global light beam F is formed of one or a plurality of different light beams b according to one or a plurality of second ranges of wavelengths w'. When it is formed of a plurality of different light beams b according to a plurality of second ranges of wavelengths w', said second ranges of wavelengths w' can be equal or different.

In the first non-limitative embodiment of the lighting device 1 illustrated in figure 1, the global light beam F is composed of one light beam b.

In the second non-limitative embodiment of the lighting device 1 illustrated in figures 2a and 2b, the global light beam F is composed of two light beams b1 and b2.

In the third non-limitative embodiment of the lighting device 1 illustrated in figure 3, the global light beam F is composed of three light beams b1, b2 and b3. In this case, the following remarks are made regarding the activation of the light sources 10 of the lighting device 1 when "Red" QDs are used in the first wavelength conversion layer 120₁, and "Green" QDs are used in the second wavelength conversion layer 120₂, and blue native light is used :
- to obtain only a blue color for the global light beam F, one has to switch off the light sources 10₁ and 10₂ whose light rays r1₁ and r1₂ cooperate respectively with the first optical lightguide 11₁, aka the bottom one, and with the second optical lightguide 11₂, aka the intermediate one ; and one has to switch on the light source 10₃ whose light rays r1₃ cooperate with the third optical lightguide 11₃, aka the top one,
- to obtain only a green color for the global light beam F, one has to switch off the light source the light source 10₁ whose light rays r1₁ cooperate with the bottom optical lightguide 11₁, and the light source 10₃ whose light rays r1₃ cooperate with the top optical lightguide 11₃ ; and one has to switch on the light source 10₂ whose light rays r1₂ cooperate with the intermediate optical lightguide 11₂.
- to obtain only a red color for the global light beam F, one has to switch off the light source 10₂ whose light rays r1₂ cooperate with the intermediate optical lightguide 11₂, and the light source 10₃ whose light rays r1₃ cooperate with the top optical lightguide 11₃ ; and one has to switch on the light source 10₁ whose light rays r1₁ cooperate with the bottom optical lightguide 11₁,
- to obtain a mixed color for the global light beam F, one has to switch on all the light sources 10₁, 10₂, 10₃ whose light rays r1 cooperate respectively with the first optical lightguide 11₁ at the bottom, with the intermediate optical lightguide 11₂, and with the third optical lightguide 11₃ at the top, and one has to play with a modulation of the different light sources 10 to obtain a percentage of the different blue, green and red colors one wants to obtain. In a non-limitative embodiment, a PWM modulation is applied on the light sources 10.

It is to be understood that the present invention is not limited to the aforementioned embodiments and variations and modifications may be made without departing from the scope of the invention. In this respect, the following remarks are made. All statements herein reciting principles, aspects, and embodiments of the invention, as well as specific examples thereof, are intended to encompass equivalents thereof. Hence, in another non-limitative embodiment, more than two wavelength conversion layers 120 in the stack 12 are used.

Hence, some embodiments of the invention may comprise one or a plurality of the following advantages:
- it permits to remove the diffusive foil of the prior art and it is less expensive to manufacture than this prior art, as QDs deposition is easier, faster and less expensive than a thermoform process,
- it permits color tuning : one can have different variations of colors R, G B or colors composed of any combination of R, G, B colors; it permits to adjust the proportion of the R, G and B wavelengths to obtain a desired color,
- it permits to have a higher color gamut of RGB than the prior art that uses RGB light sources or laser light source, thanks to the QDs, as the QDs of the wavelength conversion layers 120 can be independently excited and offer a purest color than native RGB light sources ; indeed, with the wavelength conversion layers 120 the light spectrum is more narrow due to a lower value of FWHM ("Full Width at Half Maximum" parameter than the one of the RGB light sources. Therefore, the light spectrum of the wavelength conversion layers 120 is purer. It means that in the CIE color diagram known by the man skilled in the art, it is possible to select more purer RGB color points. Therefore, one can form a wider triangle which means that one can select more colors (in fact all colors inside said triangle) compared to other technologies such as the RGB light sources whose triangle is smaller,
- it is more stable than the prior art, as one can control the color(s) that is output by the lighting device 1,
- it is more efficient than the prior art as one can spectrally determine the second range of wavelengths w',
- it reduces scraps from 20% to 5%,
- it permits to obtain an homogeneous global light beam F thanks to the optical lightguides 11 with their micro/nanostructures that act as a diffuser,
- the easiness of QDs deposition allows to create endless of RGB patterns directly on different layers of the lighting device 1,
- it reduces the cost when using blue light sources, contrary to RGB light sources,
- it reduces the cost when using blue light sources, as a blue light source is less complex than a RGB light source,
- it reduce the power consumption around 45% when using blue light sources compared with RGB light sources : the blue light sources consume less energy compared to RGB light sources to generate a same color output,
- thanks to the combination of the stack 12 and of the optical lightguide(s) 11, one can remove the diffusive foil of the prior art and thus reducing the process time and cost to obtain a global light beam with another color than the one of the light source(s). Moreover, one can obtain a wider gamut of RGB colors than with the prior art, whereas with a diffusive foil, one can't change its color,
- it permits to have more powerful light sources than the prior art where the RGB light emitted diodes incorporate the same packaging for the three dies for the colors.

## Claims

1. Lighting device (1), said lighting device (1) comprising :
- at least one light source (10) that is configured to emit light rays (r1) according to a first range of wavelengths (w), wherein said at least one light source (10) is monochromatic and wherein said lighting device (1) further comprises:
- at least one optical lightguide (11) with optical structures (110) that are configured to receive said light rays (r1) and to guide them according to respectively an orientation (o),
- a stack (12) of at least one wavelength conversion layer (120) that is configured to receive said light rays (r1) according to said orientation (o) and to transform them into at least one light beam (b) according to at least one second range of wavelengths (w') so as to produce a global light beam (F).

2. Lighting device (1) according to claim 1, wherein said orientation (o) is of 90° from the light rays (r1) emitted by said at least one light source (10).

3. Lighting device (1) according to any of the preceding claims, wherein said first range of wavelengths (w) corresponds to one of the range of the blue light, of the red light, or of the green light.

4. Lighting device (1) according to the preceding claim, wherein said first range of wavelengths (w) corresponds to the range of the blue light.

5. Lighting device (1) according to any of the preceding claims, wherein said second range of wavelengths (w') corresponds to the range from the blue light to the red light in the visible spectrum, and until the infrared light.

6. Lighting device (1) according to any of the preceding claims, wherein said wavelength conversion layer (120) is composed of a substrate (1200) of quantum dots.

7. Lighting device (1) according to any of the preceding claims, wherein said lighting device (1) comprises a plurality of light sources (10) and said light sources (10) are configured to be activated and deactivated independently from each other.

8. Lighting device (1) according to any of the preceding claims, wherein said lighting device (1) comprises three light sources (10), three optical lightguides (1), and wherein said stack (12) comprises two wavelength conversion layers (120).

9. Lighting device (1) according to the preceding claim, wherein said stack (12) comprises :
- a first wavelength conversion layer (120₁) with quantum dots that are emitted in the red color emission wavelength, followed by
- a second wavelength conversion layer (120₂) with quantum dots that are emitted in the green color emission wavelength.

10. Lighting device (1) according to claim 8 or claim 9, wherein said three light sources (10) are blue lights.

11. Lighting device (1) according to any of the preceding claims, wherein said lighting device (1) further comprises at least one folder (13).

12. Lighting device (1) according to any of the preceding claims, wherein said lighting device (1) further comprises at least one collimator (14).

13. Lighting device (1) according to any of the preceding claims, wherein said lighting device (1) further comprises a decorative element (16) or is directly adjacent to a decorative element (16).

14. Lighting module (20) for a vehicle, said lighting module (20) comprising a lighting device (1) according to any of the preceding claims, a housing (200) that is configured to house said lighting device (1), and a carrier (201).

15. Lighting module (20) according to the preceding claim, wherein said lighting module (20) is a lamp of the vehicle (2), or a dashboard lighting module, or an interior element of the vehicle (2).
